# EUROPEAN PATENT APPLICATION

(11) **EP 4 309 949 A1**
(43) Date of publication of application: **24.01.2024**
(21) Application number: 22185808.7
(22) Date of filing: 19.07.2022
(51) Int. Cl.: B60L 58/19, H02J 7/00, H02M 1/38

(54) **ENERGY STORAGE SYSTEM, ELECTRIFIED VEHICLE COMPRISING SUCH AN ENERGY STORAGE SYSTEM, AND METHOD OF OPERATION OF SUCH AN ENERGY STORAGE SYSTEM**

(71) Applicant: Volvo Truck Corporation, 405 08 Göteborg (SE)
(72) Inventor: GUERRERO, Jose, 411 28 GÖTEBORG (SE)
(74) Representative: Lavoix

(57) **Abstract**

The invention concerns an energy storage system (12) for an electrified vehicle comprising a first battery module (20) and a second battery module (22) connected in series and providing a first voltage by connecting to a first positive output (24A) and to a first negative output (24B) of the first and second battery modules. The energy storage system comprises an energy storage module (30), providing a second voltage by connecting to its positive and negative output (32A, 32B), and four switches (40, 42, 44, 46) connecting positive and negative terminals (30A, 30B) of the energy storage module to positive and negative terminals (20A, 20B, 22A, 22B) of the first and second battery modules. By operating the four switches, the energy storage system can take one of three configurations: the energy storage module is connected in parallel with the first battery module, or connected in parallel with the second battery module, or isolated from the first and second battery modules.

## Description

### TECHNICAL FIELD

The disclosure relates generally to electrical energy management in electrified vehicles. In particular aspects, the present invention relates to an energy storage system an electrified vehicle comprising such an energy storage system, and a method of operation of such an energy storage system

The invention can be applied in heavy-duty vehicles, such as trucks, buses and construction equipment. Although the invention will be described with respect to a truck, the invention is not restricted to this particular vehicle, but may also be used in other vehicles.

### BACKGROUND

In the domain of heavy-duty vehicles, such as trucks, powered by a diesel motor, it is known to provide an exhaust heater, to heat the exhaust gases at motor start. Indeed, when the motor is cold, the motor produces a high level of polluting emissions, such as NOX particles. Heating of the exhaust gases reduces these emissions by burning them. For such a heating, one usually uses an electric exhaust heater powered by a first battery, in particular by a 48V battery.

It is also known to provide a second battery, in particular a 12V battery in the USA or a 24V in Europe, to enable the vehicle to be started and to supply auxiliary functions, such as air conditioning.

In existing solutions, the first and second batteries are generally independent. Thus, if the second battery is fully discharged, the vehicle can no longer be started, even if the first battery is fully charged. To avoid this, it is known to provide a DC/DC converter to recharge the second battery with the first battery. However, such a DC/DC converter is expensive, usually requires cooling, and therefore increases the cost and complexity of the vehicle.

To address these issues, it is also known to use a battery system comprising two battery modules connected in series, these two modules being a first battery module of 36V and a second battery module of 12V. Thus, a 48V voltage is obtained by connecting to the terminals of the battery system and a 12V voltage is obtained by connecting to the terminals of the second battery module. An electronic device allows for energy balancing between the two battery modules. However, this solution has the disadvantage of placing an unbalanced load on the two battery modules, since the first battery module is only solicited when a 48V voltage is needed and the second battery module is solicited more often. Thus, the aging of the second battery module is faster than the aging of the first battery module, which can cause a premature failure of the battery system.

It is to these disadvantages that the invention intends more particularly to remedy by proposing a battery system that can deliver two distinct voltages, that is reliable and less expensive to manufacture.

### SUMMARY

According to an aspect of the disclosure, the invention relates to an energy storage system for an electrified vehicle comprising a first battery module having a positive terminal and a negative terminal and a second battery module having a positive terminal and a negative terminal. The negative terminal of the first battery module is connected to the positive terminal of the second battery module, so that the first and the second battery modules are connected in series, the positive terminal of the first battery module is connected to a first positive output of the energy storage system, and the negative terminal of the second battery module is connected to a first negative output of the energy storage system. The energy storage system is configured to provide a first voltage to a first electric load by connecting the first electric load to the first positive output and to the first negative output.

According to the invention, the energy storage system comprises an energy storage module having a positive terminal and a negative terminal, wherein the positive terminal of the energy storage module is connected to a second positive output of the energy storage system, the negative terminal of the energy storage module is connected to a second negative output of the energy storage system, and the energy storage system is configured to provide a second voltage to a second electric load by connecting the second electric load to the second positive output and to the second negative output, the second voltage being lower than the first voltage.

Furthermore, the energy storage system comprises four switches, of which a first switch is switchable between a closed state in which the positive terminal of the energy storage module is electrically connected to the positive terminal of the first battery module and an open state in which the positive terminal of the energy storage module is electrically isolated from the positive terminal of the first battery module, a second switch is switchable between a closed state in which the negative terminal of the energy storage module is electrically connected to the negative terminal of the first battery module and an open state in which the negative terminal of the energy storage module is electrically isolated from the negative terminal of the first battery module, a third switch is switchable between a closed state in which the positive terminal of the energy storage module is electrically connected to the positive terminal of the second battery module and an open state in which the positive terminal of the energy storage module is electrically isolated from the positive terminal of the second battery module, and a fourth switch is switchable between a closed state in which the negative terminal of the energy storage module is electrically connected to the negative terminal of the second battery module and an open state in which the negative terminal of the energy storage module is electrically isolated from the negative terminal of the second battery module.

Moreover, the energy storage system can take one of three configurations where in a first configuration, the energy storage module is connected in parallel with the first battery module, the first and second switches being in the closed state and the third and fourth switches being in the open state, in a second configuration, the energy storage module is connected in parallel with the second battery module the first and second switches being in the open state and the third and fourth switches being in the closed state, and in a third configuration, the energy storage module is electrically isolated from the first and second battery modules, with the four switches in their open state.

An advantage of the invention is that the energy storage module can be connected either to the first battery module or to the second battery module, based on a state of the first and second battery modules, thus balancing the ageing of the first and second battery modules. Therefore, the lifespan of the energy storage system is increased.

In certain examples, the energy storage system further comprises an electronic control unit configured to control the switching of the four switches between their closed and open states. Hereby, the operating of the four switching is automated and facilitated.

In certain examples, the electronic control unit comprises a battery management system configured to manage the charge and the discharge of the first battery module, of the second battery module and of the energy storage module. Hereby, the operation of the first and second battery modules and of the energy storage module is secured.

In certain examples, the electronic control unit comprises an energy management system configured to choose whether the first battery module or the second battery module recharges the energy storage module or whether the energy storage module recharges the first battery module or the second battery module. Hereby, the charge of the first and second battery module and of the energy storage module is optimized.

In certain examples, the energy storage module comprises at least one battery. Hereby, the energy storage module is adapted for long-term energy storage and cheap to manufacture.

In certain examples, the energy storage module comprises at least one supercapacitor. Hereby, the energy storage module is adapted to undergo a large number of charge/discharge cycles.

In certain examples, the first voltage is twice as high as the second voltage. Hereby, the energy storage can easily provide useful voltages, such as 24V and 48V.

In certain examples, the energy storage system comprises an auxiliary first positive output and the energy storage system is configured to provide an auxiliary first voltage to an auxiliary first electric load by connecting the auxiliary first electric load to the auxiliary first positive output and to the first negative output. Preferably, the energy storage system comprises a main first switch, switchable between a closed state in which the first positive output is electrically connected to the positive terminal of the first battery module and an open state in which the first positive output is electrically isolated from the positive terminal of the first battery module, and an auxiliary first switch, switchable between a closed state in which the auxiliary first positive output is electrically connected to the positive terminal of the first battery module and an open state in which the auxiliary first positive output is electrically isolated from the positive terminal of the first battery module. Hereby, the energy storage system can be connected to two distinct first electric loads, and one or the other of the two first electric loads can be disconnected from the energy storage system.

In certain examples, the energy storage system comprises an auxiliary second positive output and the energy storage system is configured to provide an auxiliary second voltage to an auxiliary second electric load by connecting the auxiliary second electric load to the auxiliary second positive output and to the second negative output. Preferably, the energy storage system comprises a main second switch, switchable between a closed state in which the second positive output is electrically connected to the positive terminal of the energy storage module and an open state in which the second positive output is electrically isolated from the positive terminal of the energy storage module, and an auxiliary second switch, switchable between a closed state in which the auxiliary second positive output is electrically connected to the positive terminal of the energy storage module and an open state in which the auxiliary second positive output is electrically isolated from the positive terminal of the energy storage module. Hereby, the energy storage system can be connected to two distinct second electric loads, and one or the other of the two second electric loads can be disconnected from the energy storage system.

In certain examples, the energy storage module comprises a first sub-module, having a positive terminal and a negative terminal, and a second sub-module, having a positive terminal and a negative terminal, the negative terminal of the first sub-module being connected to the positive terminal of the second sub-module, so that the first and the second sub-modules are connected in series. In addition, the energy storage system comprises an auxiliary energy storage module having a positive terminal connected to a third positive output of the energy storage system and a negative terminal connected to a third negative output of the energy storage system, and the energy storage system is configured to provide a third voltage to a third electric load by connecting the third electric load to the third positive output and to the third negative output, the third voltage being lower than the second voltage. Furthermore, the energy storage system comprises four auxiliary switches, of which a first auxiliary switch is switchable between a closed state in which the positive terminal of the auxiliary energy storage module is electrically connected to the positive terminal of the first sub-module and an open state in which the positive terminal of the auxiliary energy storage module is electrically isolated from the positive terminal of the first sub-module, a second auxiliary switch is switchable between a closed state in which the negative terminal of the auxiliary energy storage module is electrically connected to the negative terminal of the first sub-module and an open state in which the negative terminal of the auxiliary energy storage module is electrically isolated from the negative terminal of the first sub-module, a third auxiliary switch is switchable between a closed state in which the positive terminal of the auxiliary energy storage module is electrically connected to the positive terminal of the second sub-module and an open state in which the positive terminal of the auxiliary energy storage module is electrically isolated from the positive terminal of the second sub-module, and a fourth auxiliary switch is switchable between a closed state in which the negative terminal of the auxiliary energy storage module is electrically connected to the negative terminal of the second sub-module and an open state in which the negative terminal of the auxiliary energy storage module is electrically isolated from the negative terminal of the second sub-module. Furthermore, the energy storage system can take one of three configurations where in a first configuration, the auxiliary energy storage module is connected in parallel with the first sub-module, the first and second auxiliary switches being in the closed state and the third and fourth auxiliary switches being in the open state, in a second configuration, the auxiliary energy storage module is connected in parallel with the second sub-module, the first and second auxiliary switches being in the open state and the third and fourth auxiliary switches being in the closed state, and in a third configuration, the auxiliary energy storage module is electrically isolated from the first and second sub-modules, with the four auxiliary switches in their open state. Owing to the invention, the energy storage system provides three voltages, and the auxiliary energy storage module can be connected either to the first sub-module or to the second sub-module, based on a state of the first and second sub-modules, thus balancing the ageing of the first and second sub-modules. Therefore, the lifespan of the energy storage system is increased.

According to another aspect of the disclosure, the invention also relates to an electrified vehicle comprising the energy storage system described here above.

In certain examples, the electrified vehicle further comprises an alternator and the alternator provides electricity for recharging the first battery module and the second battery module, or provides electricity for recharging the energy storage module. Hereby, the energy storage system is recharged by the vehicle and only one alternator is sufficient to recharge the first and second battery modules and the energy storage module.

In certain examples, the electrified vehicle further comprises an electric generator, and, when the electrified vehicle is decelerating, the electric generator provides electricity for recharging the first battery module and the second battery module, or provides electricity for recharging the energy storage module, by regenerative braking. Hereby, the energy storage system is recharged by the vehicle.

According to another aspect of the disclosure, the invention also relates to a method of operation of an energy storage system described here above. The method comprises:
a) measuring a first parameter representative of the state of the first battery module and a second parameter representative of the state of the second battery module,
b) comparing the first parameter to the second parameter,
c) based on the comparison of step b), determining whether the energy storage module should be connected in parallel with the first battery module or in parallel with the second battery module to balance the states of the first and second battery modules, and
d) based on the determination of step c) operating the four switches accordingly.
Hereby, the states of the first and second battery modules are balanced and the lifespan of the energy storage system is increased.

In certain examples, the first parameter and the second parameter are chosen between a state of health of the first battery module and a state of health of the second battery module; a state of charge of the first battery module and a state of charge of the second battery module; or a number of discharges the first battery module has completed and a number of discharges the second battery module has completed. Hereby, several parameters can be considered when choosing how to balance the state of the two battery modules, giving a better control of the ageing of the energy storage system.

Additional features and advantages are disclosed in the following description, claims, and drawings, and will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
FIG. 1 is a top view of an exemplary electrified vehicle according to the invention;
FIG. 2 is a schematic view of an exemplary energy storage system according to a first embodiment of the invention and belonging to the electrified vehicle of Figure 1;
FIG. 3 is a schematic view of an exemplary energy storage system according to a second embodiment of the invention; and
FIG. 4 is a schematic view of an exemplary energy storage system according to a third embodiment of the invention.

### DETAILED DESCRIPTION OF EXAMPLE EMBODIMENTS OF THE INVENTION

Aspects set forth below represent the necessary information to enable those skilled in the art to practice the disclosure.

The disclosure proposes an energy storage system that can deliver two distinct voltages, that is reliable and less expensive to manufacture than known systems.

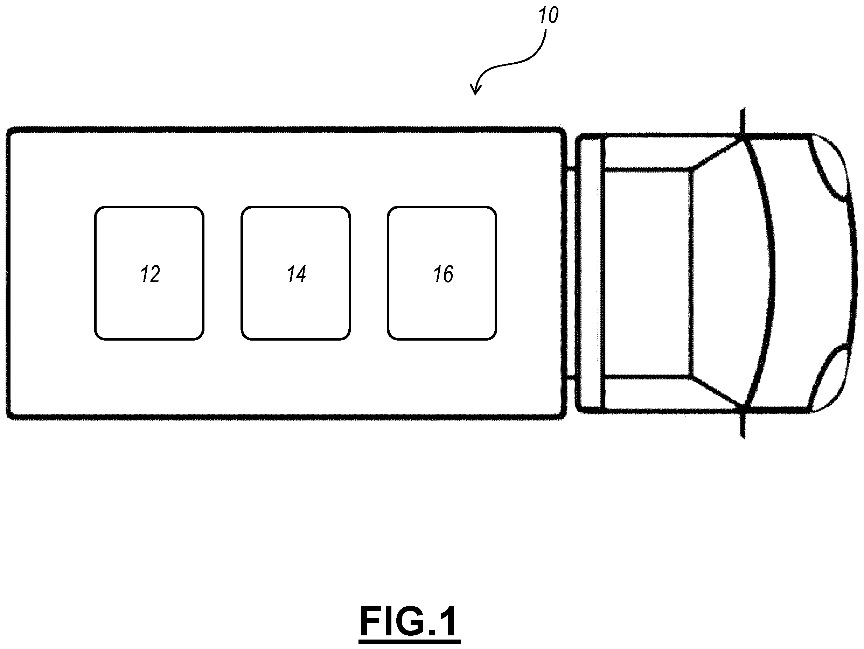

Figure 1 shows an electrified vehicle 10 comprising an energy storage system 12 and a motor 14 for the propulsion of the vehicle. In the example, the motor 14 is a combustion motor, or engine, such as a diesel engine.

The energy storage system 12, described in more details hereinafter, provides a first voltage and a second voltage. The first and second voltages are, in the example, respectively a 48V voltage and a 24V voltage. Any other alternative voltages can be considered.

Advantageously, the 48V voltage is used to power an exhaust heater, not shown. The exhaust heater is heating exhaust gases emitted by the diesel motor 14, in particular when the diesel motor is cold. By heating the exhaust gases, some of the polluting emissions contained in the exhaust gases, such as NOX particles, are burned. Therefore, by heating the exhaust gases, the level of polluting emissions emitted by the motor is reduced. Any other alternative electric load powered by the 48V voltage can be considered.

Advantageously, the 24V voltage is used to power a starter, not shown, of the motor 14, and/or to power auxiliary functions of the electrified vehicle 10, such as air conditioning, and/or convenience devices for the vehicle's driver, for example a television, and/or a refrigerator. Any other alternative electric load powered by the 24V voltage can be considered.

Advantageously, the electrified vehicle 10 comprises an alternator 16, which is driven by the motor 14 and provides electricity to the energy storage system 12, as described hereinafter.

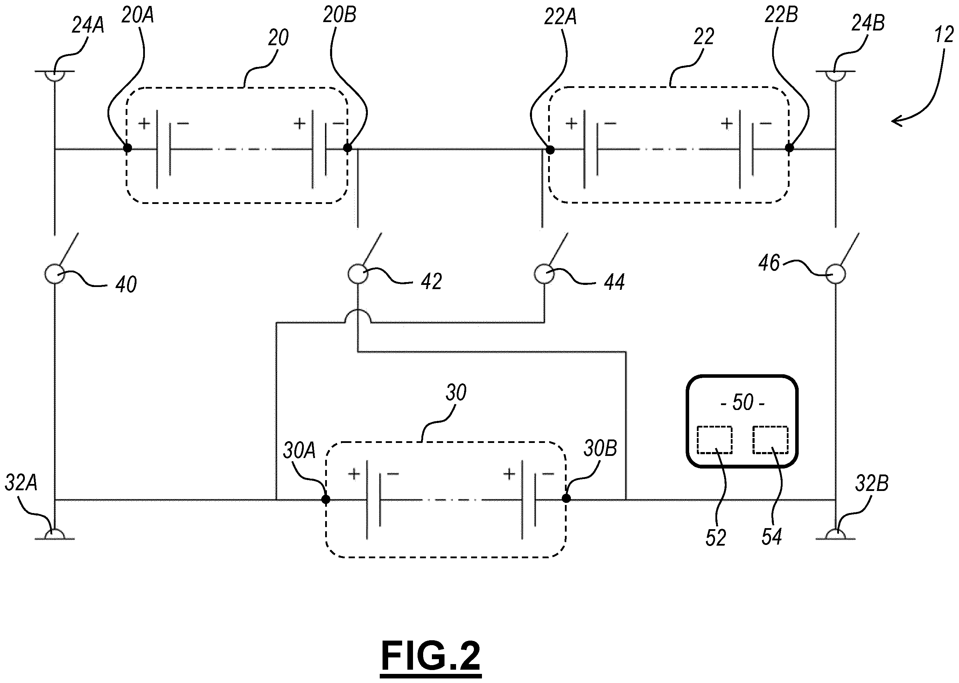

As visible on Figure 2, the energy storage system 12 comprises a first battery module 20, having a positive terminal 20A and a negative terminal 20B, and a second battery module 22, having a positive terminal 22A and a negative terminal 22B. The negative terminal 20B of the first battery module 20 is directly connected to the positive terminal 22A of the second battery module 22, so that the first and the second battery modules are connected in series.

In practice, each battery module 20, 22 comprises one battery or multiple batteries connected in series or in parallel, each battery comprising one or more battery cells. In the example of Figure 2, each battery module is represented as two batteries connected in series. Any other battery arrangement can be considered to form the battery modules.

The energy storage system 12 comprises a first positive output 24A and a first negative output 24B, which are directly connected, respectively, to the positive terminal 20A of the first battery module 20 and to the negative terminal 22B of the second battery module 22. Thus, the energy storage system 12 provides a first voltage to a first electric load, by connecting the first electric load to the first positive output 24A and to the first negative output 24B. In other words, the first voltage is obtained by connecting to the outputs of the first and second battery modules 20, 22 connected in series. The first voltage is therefore equal to the sum of the voltage of the first battery module 20 and the voltage of the second battery module 22.

The first positive and negative outputs 24A and 24B can also be used to recharge the first and second battery modules 20, 22, by applying a recharge voltage to the first positive and negative outputs.

The first battery module 20 and the second battery module 22 are both providing the same voltage. In the example, each of the first and second battery module provides a voltage of 24V. Therefore, in the example, the first voltage is equal to 48V and the first electric load connected to the first positive and negative outputs 24A, 24B is the exhaust heater.

The energy storage system 12 comprises an energy storage module 30 having a positive terminal 30A and a negative terminal 30B.

The energy storage system 12 comprises a second positive output 32A and a second negative output 32B, which are directly connected, respectively, to the positive terminal 30A of the energy storage module 30 and to the negative terminal 30B of the energy storage module 30. Thus, the energy storage system 12 provides a second voltage to a second electric load, by connecting the second electric load to the second positive output 32A and to the second negative output 32B. In other words, the second voltage is obtained by connecting to the outputs of the energy storage module 30.

The second positive and negative outputs 32A and 32B can also be used to recharge the energy storage module 30, by applying a recharge voltage to the second positive and negative outputs.

The energy storage system 12 comprises a first switch 40, a second switch 42, a third switch 44 and a fourth switch 46.

The first switch 40 is switchable between a closed state in which the positive terminal 30A of the energy storage module 30 is electrically connected to the positive terminal 20A of the first battery module 20 and an open state in which the positive terminal of the energy storage module is electrically isolated from the positive terminal of the first battery module.

The second switch 42 is switchable between a closed state in which the negative terminal 30B of the energy storage module 30 is electrically connected to the negative terminal 20B of the first battery module 20 and an open state in which the negative terminal of the energy storage module is electrically isolated from the negative terminal of the first battery module.

The third switch 44 is switchable between a closed state in which the positive terminal 30A of the energy storage module 30 is electrically connected to the positive terminal 22A of the second battery module 22 and an open state in which the positive terminal of the energy storage module is electrically isolated from the positive terminal of the second battery module.

The fourth switch 46 is switchable between a closed state in which the negative terminal 30B of the energy storage module 30 is electrically connected to the negative terminal 22B of the second battery module 22 and an open state in which the negative terminal of the energy storage module is electrically isolated from the negative terminal of the second battery module.

The four switches 40, 42, 44 and 46 are, for example, semiconductor switching devices, such as power semiconductor devices, or electromechanical devices, with movable electrical contacts. Any other type of switches can be considered for any one of the four switches 40, 42, 44 and 46.

The four switches 40, 42, 44 and 46 are operated by an electronic control unit 50. In the example, the electronic control unit 50 is a part of the energy storage system 12. As a variant, not shown, the electronic control unit 50 is not comprised in the energy storage system 12 but is a part of the electrified vehicle 12.

For the sake of simplicity, the logical connection between the electronic control unit 50 and the four switches 40, 42, 44 and 46 is not represented on figure 2. This communication can be wired or wireless.

The electronic control unit 50 is configured to switch the four switches between three different configurations.

In a first configuration, the first switch 40 and the second switch 42 are in their closed state, while the third switch 44 and the fourth switch 46 are in their open state. Therefore, in the first configuration, the positive terminal 30A of the energy storage module 30 is electrically connected to the positive terminal 20A of the first battery module 20 and the negative terminal 30B of the energy storage module is electrically connected to the negative terminal 20B of the first battery module. In other words, in the first configuration, the energy storage module 30 is connected in parallel with the first battery module 20 and provides the same voltage as the first battery module. In the first configuration, the energy storage module 30 is recharged by, or recharges, the first battery module 20.

In a second configuration, the first switch 40 and the second switch 42 are in their open state while the third switch 44 and the fourth switch 46 are in their closed state. Therefore, in the first configuration, the positive terminal 30A of the energy storage module 30 is electrically connected to the positive terminal 22A of the second battery module 22 and the negative terminal 30B of the energy storage module is electrically connected to the negative terminal 22B of the second battery module. In other words, in the second configuration, the energy storage module 30 is connected in parallel with the second battery module 22 and provides the same voltage as the second battery module. In the second configuration, the energy storage module 30 is recharged by, or recharges, the second battery module 22.

In a third configuration, the four switches are in their open state. Therefore, in the third configuration, the energy storage module 30 is independent of, that is electrically isolated from, the first and second battery modules 20, 22. This configuration in interesting when the energy storage module 30 does not need to be recharged, nor does it need to recharge, the first and second battery modules 20, 22. This third configuration is not described in more detail hereafter.

The electronic control unit 50 prevents all the four switches 40, 42, 44 and 46 to be switched simultaneously in their closed state, since this would induce a short circuit.

Since the voltage of the first battery module 20 is equal to the voltage of the second battery module 22, whether the switches are in the first or in the second configuration, the voltage provided by the energy storage module, that is, the second voltage, is identical, and is equal to the voltage of the first battery module and to the voltage of the second battery module. In other words, the first voltage is twice as high as the second voltage. Therefore, in the example, the second voltage is equal to 24V and the second electric load connected to the second positive and negative outputs 32A, 32B is the starter of the motor 14 and/or the auxiliary functions of the electrified vehicle 10.

Advantageously, the energy storage system 12 comprises a battery management system 52. The battery management system manages the charge and the discharge, on one hand, of the first and second battery modules 20, 22, through the first positive and negative outputs 24A, 24B, and, on the other hand, of the energy storage module 30, through the second positive and negative outputs 32A, 32B. In other words, the battery management system manages the interactions between the energy storage system 12 and the first and second electric loads.

The battery management system 52 also protects the first and second battery modules 20, 22 and the energy storage module 30 from operating outside their safe operating conditions and monitors their states, for example by monitoring their voltage, temperature and/or current. Preferably, the battery management system 52 is integrated in the electronic control unit 50, as shown in the example of Figure 2.

The battery management system 52 is configured to decide to which battery module 20, 22 the energy storage module 30 is connected in parallel with, based on the state of the battery modules, as will be described hereinafter. Thus, the electronic control unit 50 operates the four switches 40, 42, 44 and 46 based on instructions provided by the battery management system 52.

Advantageously, the energy storage system 12 comprises an energy management system 54. The energy management system 54 manages the energy transmission between, on the one hand, the first and second battery modules 20, 22, and, on the other hand, the energy storage module 30. In other words, the energy management system 54 is configured to choose whether the first battery module 20 or the second battery module 22 should recharge the energy storage module30 or whether the energy storage module should recharge the first battery module or the second battery module, as will be described hereinafter. Preferably, the energy management system 54 is integrated in the electronic control unit 50, as shown in the example of Figure 2.

The operation of the energy storage system 12 is carried by the electronic control unit 50, assisted by the battery management system 52 and the energy management system 54.

In practice, to operate the energy storage system 12, the battery management system 52 starts by measuring a first parameter representative of the state of the first battery module 20 and a second parameter representative of the state of the second battery module 22.

Advantageously, the first parameter and the second parameter are chosen between:
- A state of health of the first battery module 20 and a state of health of the second battery module 22, the state of health of a battery module being defined as the ratio of the current maximum capacity of the battery module over the theoretical maximum capacity of the battery module and being expressed as a percentage. For example, the state of health of a new battery module is 100%.
- A state of charge of the first battery module 20 and a state of charge of the second battery module 22, the state of charge of a battery module being defined as the ratio of the level of charge of the battery module over the current maximum capacity of the battery module and being expressed as a percentage. For example, the state of charge of a fully charged battery module is 100%.
- A number of discharges the first battery module 20 has completed since the first battery module is in operation and a number of discharges the second battery module 22 has completed since the second battery module is in operation.

Then, the battery management system 52 compares the first parameter to the second parameter to determine whether the energy storage module 30 should be connected in parallel with the first battery module 20 or in parallel with the second battery module 22 to balance the states of the first and second battery modules.

In a first example, when the first and second parameters are the state of health of the first and second battery modules 20, 22, the battery management system 52 concludes that the energy storage module 30 is to be connected in parallel with the battery module having the higher state of health. Thus, the energy storage module 30 is recharged by, or recharges, the battery module having the higher state of health. Therefore, the battery module having the lower state of health will be less solicited than the battery module having the higher state of health, so that the state of health of the battery module having the higher state of health will decrease faster and, consequently, the state of health of the two battery modules will tend to balance out.

In a second example, when the first and second parameters are the state of charge of the first and second battery modules 20, 22, the battery management system 52 concludes that the energy storage module 30 is to be connected in parallel with the battery module having the higher state of charge if the energy storage module 30 is recharged by the battery modules, or to be connected in parallel with the battery module having the lower state of charge if the energy storage module 30 recharges the battery modules. Thus, the state of charge of the two battery modules will tend to balance out.

In a third example, when the first and second parameters are a number of discharges the first and second battery modules 20, 22 have completed since the first and second battery modules are in operation, the battery management system 52 concludes that the energy storage module 30 is to be connected in parallel with the battery module having the lower number of discharges. Thus, the number of discharges of the two battery modules will tend to balance out.

Then, based on the conclusion of the battery management system 52, the electronic control unit 50 operates the four switches 40, 42, 44 and 46 in the first or in the second configuration.

Thanks to the operation of the energy storage system 12 carried out by the electronic control unit 50, the first parameter representative of the state of the first battery module 20 and the second parameter representative of the second battery module 22 are balanced out. The ageing of the first and second battery modules are thus balanced out, decreasing the risks of premature failing of the energy storage system.

Furthermore, the energy storage system has a low production cost and is compact and reliable, since it does not comprises expensive or complex parts like DC/DC converters.

Another advantage of the energy storage system 12 is that two distinct voltages can be provided by one system recharged by only one alternator. Indeed, since the energy storage module 30 is recharged, or recharges, the battery modules 20, 22, there is no need for a first alternator providing a voltage equal to the first voltage and a second alternator providing a voltage equal to the second voltage.

In the example, the alternator 16 of the electrified vehicle 10 provides a voltage equal to the second voltage, that is 24V in the example, and is therefore used to recharge the energy storage module 30. Thus, in the example, the energy management system 54 chooses that the energy storage module 30 recharges the first and second battery modules 20, 22. In practice, the energy storage module 30 successively recharges one or the other of the first and second battery modules 20, 22, depending on the configuration of the four switches 40, 42, 44, 46, and this alternation is carried out frequently enough to balance the aging of the two battery modules.

In this configuration, the energy storage module 30 preferably comprises one battery or multiple batteries. If the energy storage module comprises multiple batteries, they are connected in series or in parallel, or according to any other suitable battery arrangement. In the example of Figure 2, the energy storage module 30 is represented as two batteries connected in series. Each battery comprises one or more battery cells. The use of one or more batteries is particularly advantageous in this configuration. Indeed, since the energy storage module 30 undergoes few discharge cycles, being constantly recharged by the alternator 16, the use of batteries is sufficient to achieve good performance and keep the cost of the energy storage system 12 low, since batteries are generally cheap.

As an alternative, the alternator 16 of the electrified vehicle 10 provides a voltage equal to the first voltage, that is, 48V in the example, and is therefore used to recharge simultaneously the first and second battery modules 20, 22, by being connected to the first positive and negative outputs 24A and 24B. Thus, in the example, the energy management system 54 chooses that the first and second battery modules 20, 22 recharge the energy storage module 30. In practice, the energy storage module 30 is successively recharged by one or the other of the first and second battery modules 20, 22, depending on the configuration of the four switches 40, 42, 44, 46, and this alternation is carried out frequently enough to balance the aging of the two battery modules.

If the battery modules 20, 22 are fully charged, the battery management system 52 can decide to disconnect the alternator 16 from the battery modules, to reduce the resistance of the alternator and thus diminish the load on the motor 14.

In this configuration, an alternative of the energy storage module is preferably used, where the energy storage module comprises, instead of batteries, one supercapacitor or multiple supercapacitors connected in any suitable arrangement. The use of supercapacitor(s) instead of batteries is particularly advantageous. Indeed, in this configuration, the energy storage module 30 is frequently solicited to provide the second voltage to power the second electric load and is also frequently recharged by the battery modules 20, 22. In other words, the energy storage module 30 undergoes a large number of charge/discharge cycles, for which supercapacitors are more suited than batteries. Furthermore, since the energy storage module 30 is constantly recharged by the battery modules 20, 22, the supercapacitor(s) can be of low capacity, and the energy storage module 30 can therefore be particularly compact.

As another alternative, the energy storage module 30 comprises a combination of batteries and supercapacitors connected in any suitable arrangement.

As an alternative, the vehicle 10 comprises two alternators, with a first alternator providing a voltage equal to the first voltage and a second alternator providing a voltage equal to the second voltage. These two alternators are redundant, since only one is sufficient to recharge the energy storage system 12, which makes the vehicle's operation more reliable: in the event of a failure of one alternator, the other takes over. To avoid excessive load on the motor 14, one of the two alternators is preferably disconnected from the energy storage system except in case of failure of the other alternator.

As an alternative, the vehicle 10 is a hybrid vehicle, or an electric vehicle. The vehicle thus comprises one or several electric motor-generators, instead of the motor 14 or in addition to the motor 14. In this alternative, the battery management system 52 can be configured so that the battery modules 20, 22 or the energy storage module 30 are recharged by electricity provided by the electric moto-generator working as a generator when the vehicle 10 is decelerating, by regenerative braking. This recharge by regenerative braking can be used in addition, or instead, of the recharge provided by the alternator 16. In this alternative, the first voltage of 48V provided by the energy storage system 12 is, for example, used to power electric motors of the vehicle 10.

Alternatively, separated electric motors and generators can be used.

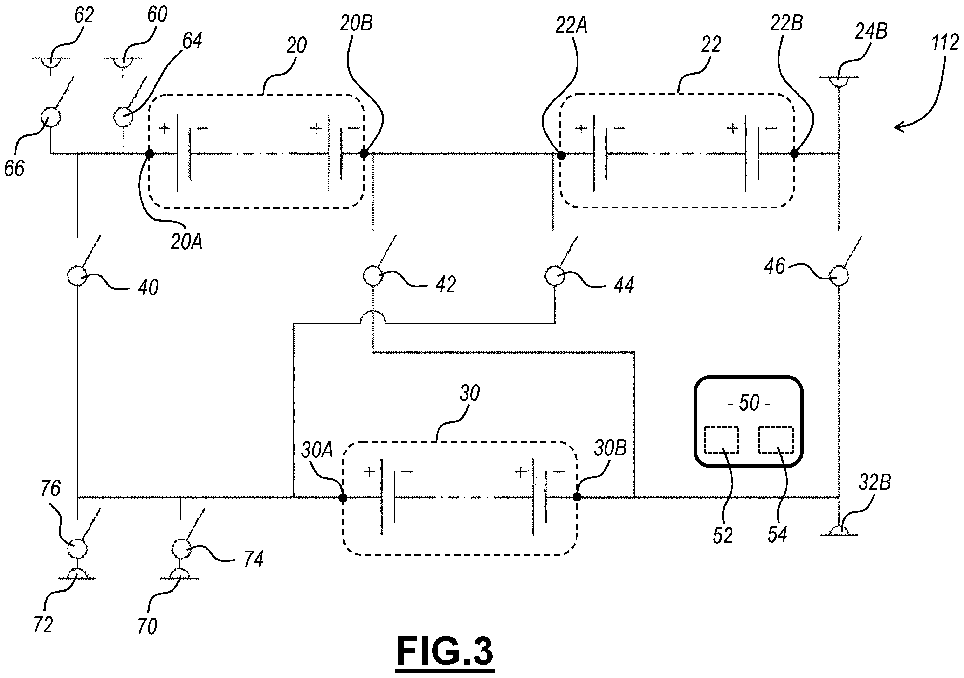

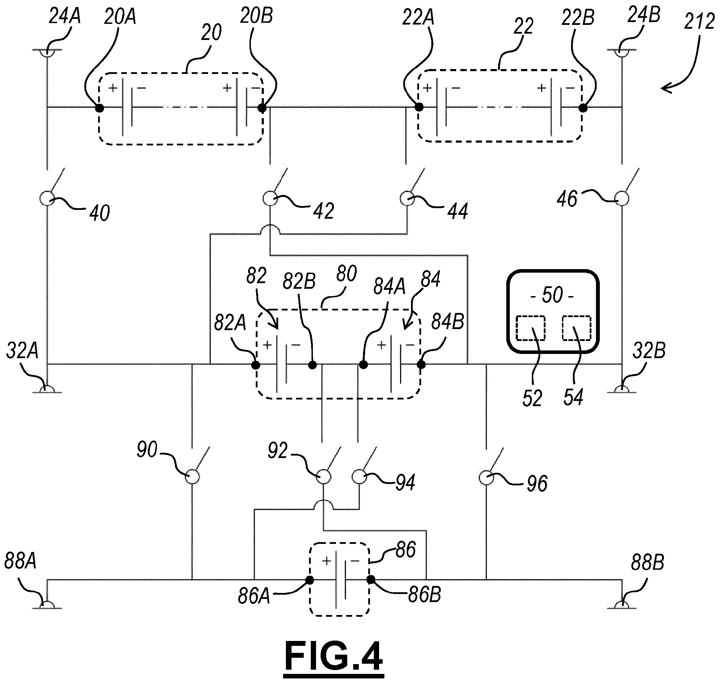

A second and a third embodiment of the energy storage system are described with reference to Figure 3 and Figure 4, respectively. In the second and third embodiments, elements similar to those in the first embodiment have the same references and function in the same manner. If a reference is used in the description of the second and third embodiments without being reproduced in the corresponding figures, it corresponds to the part or piece bearing the same reference in the first embodiment. In the following, the differences between each embodiment and the preceding embodiment(s) are primarily described.

One of the main differences between the second embodiment of the energy storage system, noted 112, and the first embodiment, is that the energy storage system 112 comprises a main first positive output 60 and an auxiliary first positive output 62, instead of the single first positive output 24A of the first embodiment, as well as a main first switch 64 and an auxiliary first switch 66. Therefore, a main first electric load can be connected to the main first positive output 60 and to the first negative output 24B, and an auxiliary first electric load can be connected to the auxiliary first positive output 62 and to the first negative output 24B.

The main first switch 64 is switchable between a closed state in which the main first positive output 60 is electrically connected to the positive terminal 20A of the first battery module 20 and an open state in which the main first positive output is electrically isolated from the positive terminal of the first battery module.

The auxiliary first switch 66 is switchable between a closed state in which the auxiliary first positive output 62 is electrically connected to the positive terminal 20A of the first battery module 20 and an open state in which the auxiliary first positive output is electrically isolated from the positive terminal of the first battery module.

When the main first switch 64 is in the closed state, it acts as an electrical conductor, such as a wire, so that the main first positive output 60 is electrically directly connected to the positive terminal 20A of the first battery module 20. In the same way, when the auxiliary first switch 66 is in the closed state, the auxiliary first positive output 62 is electrically directly connected to the positive terminal of the first battery module.

The fact that the energy storage system 112 comprises two first positive outputs is particularly advantageous, since it allows connecting two distinct first electric loads to the energy storage system, that is, the main first electric load, corresponding to the first electric load of the first embodiment, and the auxiliary first electric load. Thanks to the switches 64, 66, one or the other of the two first electric loads can be disconnected from the energy storage system 112.

For example, if the main first electric load is an exhaust heater, the main first switch 64 can be switched in the open state, to disconnect the main first positive output 60 and thus the exhaust heater, when the motor 14 is warm, that is, when heating the motor exhaust gases is no longer necessary.

For example, if the auxiliary first electric load is one or more auxiliary components of the vehicle 10, which are not necessary for the vehicle to be operated, such as entertainment or comfort devices, then the auxiliary first switch 66 can be switched in the open state, to disconnect the auxiliary first positive output 62, when the state of charge of the first and second battery modules 20, 22 is low, thereby preserving battery charge for the main first electric load, or when the power drawn by the main first electric load is high, thereby avoiding under powering the main first electric load.

Similarly, the energy storage system 112 comprises a main second positive output 70 and an auxiliary second positive output 72, instead of the single second positive output 32A of the first embodiment, as well as a main second switch 74 and an auxiliary second switch 76. Therefore, a main second electric load can be connected to the main second positive output 70 and to the second negative output 32B, and an auxiliary second electric load can be connected to the auxiliary second positive output 72 and to the second negative output 32B.

The main second switch 74 is switchable between a closed state in which the main second positive output 70 is electrically directly connected to the positive terminal 30A of the energy storage module 30 and an open state in which the main second positive output is electrically isolated from the positive terminal of the energy storage module.

The auxiliary second switch 76 is switchable between a closed state in which the auxiliary second positive output 72 is electrically directly connected to the positive terminal 30A of the energy storage module 30 and an open state in which the auxiliary second positive output is electrically isolated from the positive terminal of the energy storage module.

When the main second switch 74 is in the closed state, it acts as an electrical conductor, such as a wire, so that the main second positive output 70 is electrically directly connected to the positive terminal 30A of the energy storage module 30. In the same way, when the auxiliary second switch 76 is in the closed state, the auxiliary second positive output 72 is electrically directly connected to the positive terminal of the energy storage module.

The fact that the energy storage system 112 comprises two second positive outputs is particularly advantageous, since it allows connecting two distinct second electric loads to the energy storage system, that is, a main second electric load, corresponding to the second electric load of the first embodiment, and an auxiliary second electric load. Thanks to the switches 74, 76, one or the other of the two second electric loads can be disconnected from the energy storage system 112.

For example, if the main second electric load is a starter of the vehicle 10, the main second switch 74 can be switched in the open state, to disconnect the main second positive output 70 and thus the vehicle starter, when the vehicle is not operated, for example when the vehicle's driver is at rest.

For example, if the auxiliary second electric load is one or more auxiliary components of the vehicle 10, which are not necessary for the vehicle to be operated, such as entertainment devices, then the auxiliary second switch 76 can be switched in the open state, to disconnect the auxiliary second positive output 72, when the vehicle's driver is driving the vehicle, thereby preventing the driver to use the entertainment devices while driving.

As an alternative of the second embodiment, not shown, the energy storage system 112 comprises only one first positive output, or only one second positive output. In other words, in this alternative, only one of the first or second positive output is duplicated.

As an alternative of the second embodiment, not shown, the energy storage system 112 does not comprises the switches 64 and/or 66, and/or does not comprise the switches 74 and/or 76. For example, if the main second electric load is the vehicle's starter, the energy storage system 112 does not comprises the main second switch 74, so that the vehicle's starter is always powered. For example, if the electrified vehicle 10 is a refrigerated vehicle and the auxiliary first electric load is a refrigeration system of the vehicle, the energy storage system 112 does not comprises the auxiliary first switch 66, so that the refrigeration system is always powered. When the energy storage system 112 comprises none of the switches 64, 66, 74 and 66, having a main and an auxiliary first and second outputs is anyway useful to differentiate multiple electric load working under the same voltage.

The four switches 40, 42, 44 and 46 of the second embodiment can be the same, and operate in the same way as, the corresponding switches of the first embodiment.

One of the main differences between the third embodiment of the energy storage system, noted 212, and the first embodiment, is that the energy storage module, noted 80, of the energy storage system 212 comprises a first sub-module 82, having a positive terminal 82A and a negative terminal 82B, and a second sub-module 84, having a positive terminal 84A and a negative terminal 84B. The negative terminal 82B of the first sub-module 82 is directly connected to the positive terminal 84A of the second sub-module 84, so that the first sub-module and the second sub-module are connected in series. The positive terminal 82A of the first sub-module 82 operates in the same way as the positive terminal 30A of the energy storage module 30 according to the first embodiment. The negative terminal 84B of the second sub-module 84 operates as the negative terminal 30B of the energy storage module 30 according to the first embodiment.

The voltage provided by the sub-module 82 is equal to the voltage provided by the sub-module 84. Since the sub-modules 82, 84 are connected in series, the sum of their respective voltage is equal to the second voltage. Thus, each of the sub-modules 82, 84 provides a voltage equal to half of the second voltage, 12V in the example.

The first sub-module 82 and the second sub-module 84 are each a battery, or comprises each several batteries connected in any suitable arrangement. Alternatively, the first sub-module 82 and the second sub-module 84 are each a supercapacitor, or comprises each several supercapacitors connected in any suitable arrangement.

The energy storage system 212 also comprises an auxiliary energy storage module 86 having a positive terminal 86A and a negative terminal 86B. The auxiliary energy storage module 86 is a battery or comprises multiple batteries connected in any suitable arrangement. In the example of Figure 4, the auxiliary energy storage module 86 is represented as a single battery. Alternatively, the auxiliary energy storage module 86 is a supercapacitor or comprises multiple supercapacitors connected in any suitable arrangement.

The energy storage system 212 comprises a third positive output 88A and a third negative output 88B, which are directly connected, respectively, to the positive terminal 86A of the auxiliary energy storage module 86 and to the negative terminal 86B of the auxiliary energy storage module 86. Thus, the auxiliary energy storage system 86 provides a third voltage to a third electric load, by connecting the third electric load to the third positive output 88A and to the third negative output 88B. In other words, the third voltage is obtained by connecting to the outputs of the auxiliary energy storage module 86.

The second positive and negative outputs 88A and 88B can also be used to recharge the auxiliary energy storage module 86, by applying a recharge voltage to the third positive and negative outputs 88A and 88B.

The four switches 40, 42, 44 and 46 of the third embodiment can be the same, and operate in the same way as, the corresponding switches of the first embodiment.

The energy storage system 212 comprises a first auxiliary switch 90, a second auxiliary switch 92, a third auxiliary switch 94 and a fourth auxiliary switch 96.

The first auxiliary switch 90 is switchable between a closed state in which the positive terminal 86A of the auxiliary energy storage module 86 is electrically connected to the positive terminal 82A of the first sub-module 82 and an open state in which the positive terminal of the auxiliary energy storage module is electrically isolated from the positive terminal of the first sub-module.

The second auxiliary switch 92 is switchable between a closed state, in which the negative terminal 86B of the auxiliary energy storage module 86 is electrically connected to the negative terminal 82B of the first sub-module 82 and an open state in which the negative terminal of the auxiliary energy storage module is electrically isolated from the negative terminal of the first sub-module.

The third auxiliary switch 94 is switchable between a closed state, in which the positive terminal 86A of the auxiliary energy storage module 86 is electrically connected to the positive terminal 84A of the second sub-module 84, and an open state in which the positive terminal of the auxiliary energy storage module is electrically isolated from the positive terminal of the second sub-module.

The fourth auxiliary switch 96 is switchable between a closed state in which the negative terminal 86B of the auxiliary energy storage module 86 is electrically connected to the negative terminal 84B of the second sub-module 84 and an open state in which the negative terminal of the auxiliary energy storage module is electrically isolated from the negative terminal of the second sub-module.

The four auxiliary switches 90, 92, 94 and 96 are, for example, semiconductor switching devices, such as power semiconductor devices, or electromechanical devices, with movable electrical contacts. Any other type of switches can be considered for the four auxiliary switches 90, 92, 94 and 96.

The four auxiliary switches 90, 92, 94 and 96 are operated by the electronic control unit 50, which is configured to switch the four auxiliary switches between three different configurations.

In a first configuration, the first auxiliary switch 90 and the second auxiliary switch 92 are in their closed state while the third auxiliary switch 94 and the fourth auxiliary switch 96 are in their open state. Therefore, in the first configuration, the auxiliary energy storage module 86 is connected in parallel with the first sub-module 82, and the auxiliary energy storage module is recharged by, or recharges, the first sub-module.

In a second configuration, the first auxiliary switch 90 and the second auxiliary switch 92 are in their open state while the third auxiliary switch 94 and the fourth auxiliary switch 96 are in their closed state. Therefore, in the first configuration, the auxiliary energy storage module 86 is connected in parallel with the second sub-module 84, and the auxiliary energy storage module is recharged by, or recharges, the second sub-module.

In a third configuration, the four auxiliary switches are in their open state. Therefore, in the third configuration, the auxiliary energy storage module 86 is independent of, that is electrically isolated from, the first and second sub-modules 82, 84. This configuration in interesting when the auxiliary energy storage module 86 does not need to be recharged, nor does it need to recharge, the first and second sub-modules 82, 84. This third configuration is not described in more detail hereafter.

The electronic control unit 50 prevents all the four auxiliary switches 90, 92, 94 and 96 to be switched simultaneously in their closed state, since this would induce a short circuit.

Since the voltage of the first sub-module 82 is equal to the voltage of the second sub-module 84, whether the auxiliary switches are in the first or in the second configuration, the voltage provided by the auxiliary energy storage module 86, that is, the third voltage, is identical, and is equal to the voltage of the first sub-module and to the voltage of the second sub-module. In other words, the second voltage is twice as high as the third voltage. Therefore, in the example, the third voltage is equal to 12V and the third electric load connected to the third positive and negative outputs 88A, 88B is any electric load working under a voltage of 12V, such as electronics equipment or entertainment devices.

In a practical manner, the electronic control unit 50, the battery management system 52 and the energy management system 54 are configured to operate the sub-modules 82, 84 and the auxiliary energy storage module 86 in the same way that they operate the battery modules 20, 22 and the energy storage module 30 of the first embodiment.

An advantage of the third embodiment is that the energy storage system 212 provides simultaneously, three distinct voltages, such as, for example, 48V, 24V and 12V. The energy storage system 212 can thus power simultaneously three different electric load with three distinct voltages.

The fact that the energy storage system 212 provides three different voltages is also particularly useful to allow the energy storage system to be used indifferently in different world region, such as, for example, the USA and Europe. Indeed, auxiliary electric loads such as entertainment devices and light electronics devices are usually working under a voltage of 12V in the USA, and under a voltage of 24V in Europe, with exhaust heaters working under a voltage of 48V both in the USA and in Europe. Therefore, auxiliary electric loads can be connected to the energy storage module 80 in Europe, to be provided with 24V voltage, and to the auxiliary storage module 86 in the USA, to be provided with 12V voltage. The manufacturing costs of the energy storage system 212 is then reduced, since it can be produced in larger quantities to be sold both in the USA and in Europe.

In is understood that, in the third embodiment, the energy storage system 212 comprises three levels of energy storage devices, each level providing a different voltage. As an alternative of the third embodiment, not shown, the energy storage system comprises more than three levels, such as, for example, eight levels. In such an example, the energy storage system provides eight different voltages, the higher voltage being eight times higher than the lower voltage. These voltages are, for example, 50V, 100V, 150V, 200V, 250V, 300V, 350V and 400V.

As an alternative to the third embodiment, not shown, the first positive output 24A, the second positive output 32A and/or the third positive output 88A can be connected or disconnected with a switch, as in the second embodiment, and the energy storage system 212 comprises an auxiliary first positive output, an auxiliary second positive output and/or an auxiliary third positive output, which can also advantageously be connected or disconnected with a switch.

Generally speaking, in all embodiments, the negative outputs 24B, 32B and/or 88B of the energy storage system of the invention can be connected to the ground of the vehicle 10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An energy storage system (12; 112; 212) for an electrified vehicle (10) comprising a first battery module (20) having a positive terminal (20A) and a negative terminal (20B) and a second battery module (22) having a positive terminal (22A) and a negative terminal (22B), wherein:
- the negative terminal of the first battery module is connected to the positive terminal of the second battery module, so that the first and the second battery modules are connected in series,
- the positive terminal of the first battery module is connected to a first positive output (24A; 60) of the energy storage system, and
- the negative terminal of the second battery module is connected to a first negative output (24B) of the energy storage system,
wherein the energy storage system (12; 112; 212) is configured to provide a first voltage to a first electric load by connecting the first electric load to the first positive output (24A; 60) and to the first negative output (24B),
**characterized in that**:
- the energy storage system (12; 112; 212) comprises an energy storage module (30; 80) having a positive terminal (30A; 82A) and a negative terminal (30B; 84B), wherein:
o the positive terminal of the energy storage module is connected to a second positive output (32A; 70) of the energy storage system,
∘ the negative terminal of the energy storage module is connected to a second negative output (32B) of the energy storage system, and
∘ the energy storage system is configured to provide a second voltage to a second electric load by connecting the second electric load to the second positive output and to the second negative output, the second voltage being lower than the first voltage;
- the energy storage system comprises four switches (40, 42, 44, 46), of which:
∘ a first switch (40) is switchable between a closed state in which the positive terminal (30A; 82A) of the energy storage module (30; 80) is electrically connected to the positive terminal (20A) of the first battery module (20) and an open state in which the positive terminal of the energy storage module is electrically isolated from the positive terminal of the first battery module,
∘ a second switch (42) is switchable between a closed state in which the negative terminal (30B; 84B) of the energy storage module (30; 80) is electrically connected to the negative terminal (20B) of the first battery module (20) and an open state in which the negative terminal of the energy storage module is electrically isolated from the negative terminal of the first battery module,
∘ a third switch (44) is switchable between a closed state in which the positive terminal (30A; 82A) of the energy storage module (30; 80) is electrically connected to the positive terminal (22A) of the second battery module (22) and an open state in which the positive terminal of the energy storage module is electrically isolated from the positive terminal of the second battery module, and
∘ a fourth switch (46) is switchable between a closed state in which the negative terminal (30B; 84B) of the energy storage module (30; 80) is electrically connected to the negative terminal (22B) of the second battery module (22) and an open state in which the negative terminal of the energy storage module is electrically isolated from the negative terminal of the second battery module; and
- the energy storage system (12; 112; 212) can take one of three configurations where:
∘ in a first configuration, the energy storage module (30; 80) is connected in parallel with the first battery module (20), the first and second switches (40, 42) being in the closed state and the third and fourth switches (44, 46) being in the open state,
∘ in a second configuration, the energy storage module is connected in parallel with the second battery module (22) the first and second switches (40, 42) being in the open state and the third and fourth switches (44, 46) being in the closed state, and
∘ in a third configuration, the energy storage module is electrically isolated from the first and second battery modules (20, 22), with the four switches (40, 42, 44, 46) in their open state.

2. The energy storage system (12; 112; 212) according to claim 1, wherein the energy storage system (12; 112; 212) further comprises an electronic control unit (50) configured to control the switching of the four switches (40, 42, 44, 46) between their closed and open states.

3. The energy storage system (12; 112; 212) according to claim 2, wherein the electronic control unit (50) comprises a battery management system (52) configured to manage the charge and the discharge of the first battery module (20), of the second battery module (22) and of the energy storage module (30; 80).

4. The energy storage system (12; 112; 212) according to either one of claims 2 or 3, wherein the electronic control unit (50) comprises an energy management system (54) configured to choose whether the first battery module (20) or the second battery module (22) recharges the energy storage module (30; 80) or whether the energy storage module recharges the first battery module or the second battery module.

5. The energy storage system (12; 112; 212) according to any one of claims 1 to 4, wherein the energy storage module (30; 80) comprises at least one battery.

6. The energy storage system (12; 112; 212) according to any one of claims 1 to 5, wherein the energy storage module (30; 80) comprises at least one supercapacitor.

7. The energy storage system (12; 112; 212) according to any one of claims 1 to 6, wherein the first voltage is twice as high as the second voltage.

8. The energy storage system (112) according to any one of claims 1 to 7, wherein the energy storage system (112) comprises an auxiliary first positive output (62), wherein the energy storage system is configured to provide an auxiliary first voltage to an auxiliary first electric load by connecting the auxiliary first electric load to the auxiliary first positive output and to the first negative output (24B), and wherein, preferably, the energy storage system comprises:
- a main first switch (64), switchable between a closed state in which the first positive output (60) is electrically connected to the positive terminal (20A) of the first battery module (20) and an open state in which the first positive output is electrically isolated from the positive terminal of the first battery module, and
- an auxiliary first switch (66), switchable between a closed state in which the auxiliary first positive output (62) is electrically connected to the positive terminal of the first battery module and an open state in which the auxiliary first positive output is electrically isolated from the positive terminal of the first battery module.

9. The energy storage system (112) according to any one of claims 1 to 8, wherein the energy storage system (112) comprises an auxiliary second positive output (72), wherein the energy storage system is configured to provide an auxiliary second voltage to an auxiliary second electric load by connecting the auxiliary second electric load to the auxiliary second positive output and to the second negative output (32B), and wherein, preferably, the energy storage system comprises:
- a main second switch (74), switchable between a closed state in which the second positive output (70) is electrically connected to the positive terminal (30A) of the energy storage module (30) and an open state in which the second positive output is electrically isolated from the positive terminal of the energy storage module, and
- an auxiliary second switch (76), switchable between a closed state in which the auxiliary second positive output (72) is electrically connected to the positive terminal of the energy storage module and an open state in which the auxiliary second positive output is electrically isolated from the positive terminal of the energy storage module.

10. The energy storage system (212) according to any one of claims 1 to 9, wherein:
- the energy storage module (80) comprises a first sub-module (82), having a positive terminal (82A) and a negative terminal (82B), and a second sub-module (84), having a positive terminal (84A) and a negative terminal (84B), the negative terminal of the first sub-module being connected to the positive terminal of the second sub-module, so that the first and the second sub-modules are connected in series,
- the energy storage system (212) comprises an auxiliary energy storage module (86) having a positive terminal (86A) connected to a third positive output (88A) of the energy storage system and a negative terminal (86B) connected to a third negative output (88B) of the energy storage system, wherein the energy storage system is configured to provide a third voltage to a third electric load by connecting the third electric load to the third positive output and to the third negative output, the third voltage being lower than the second voltage,
- the energy storage system comprises four auxiliary switches (90, 92, 94, 96), of which:
∘ a first auxiliary switch (90) is switchable between a closed state in which the positive terminal (86A) of the auxiliary energy storage module (86) is electrically connected to the positive terminal (82A) of the first sub-module (82) and an open state in which the positive terminal of the auxiliary energy storage module is electrically isolated from the positive terminal of the first sub-module,
∘ a second auxiliary switch (92) is switchable between a closed state in which the negative terminal (86B) of the auxiliary energy storage module (86) is electrically connected to the negative terminal (82B) of the first sub-module (82) and an open state in which the negative terminal of the auxiliary energy storage module is electrically isolated from the negative terminal of the first sub-module,
∘ a third auxiliary switch (94) is switchable between a closed state in which the positive terminal (86A) of the auxiliary energy storage module (86) is electrically connected to the positive terminal (84A) of the second sub-module (84) and an open state in which the positive terminal of the auxiliary energy storage module is electrically isolated from the positive terminal of the second sub-module, and
∘ a fourth auxiliary switch (96) is switchable between a closed state in which the negative terminal (86B) of the auxiliary energy storage module (86) is electrically connected to the negative terminal (84B) of the second sub-module (84) and an open state in which the negative terminal of the auxiliary energy storage module is electrically isolated from the negative terminal of the second sub-module,
- the energy storage system (12; 112; 212) can take one of three configurations where:
∘ in a first configuration, the auxiliary energy storage module (80) is connected in parallel with the first sub-module (82), the first and second auxiliary switches being in the closed state and the third and fourth auxiliary switches being in the open state,
∘ in a second configuration, the auxiliary energy storage module (80) is connected in parallel with the second sub-module (84), the first and second auxiliary switches being in the open state and the third and fourth auxiliary switches being in the closed state, and
∘ in a third configuration, the auxiliary energy storage module (80) is electrically isolated from the first and second sub-modules (82, 84), with the four auxiliary switches (90, 92, 94, 96) in their open state.

11. An electrified vehicle (10) comprising the energy storage system (12; 112; 212) according to any one of claims 1 to 10.

12. The electrified vehicle (10) of claim 11, wherein the electrified vehicle (10) further comprises an alternator (16) and wherein the alternator provides electricity for recharging the first battery module (20) and the second battery module (22), or provides electricity for recharging the energy storage module (30; 80).

13. The electrified vehicle (10) of either one of claims 11 or 12, wherein the electrified vehicle (10) further comprises an electric generator, and wherein, when the electrified vehicle is decelerating, the electric generator provides electricity for recharging the first battery module (20) and the second battery module (22), or provides electricity for recharging the energy storage module (30; 80), by regenerative braking.

14. A method of operation of an energy storage system (12; 112; 212) according to any one of claims 1 to 10, **characterized in that** the method comprises:
a) measuring a first parameter representative of the state of the first battery module (20) and a second parameter representative of the state of the second battery module (22),
b) comparing the first parameter to the second parameter,
c) based on the comparison of step b), determining whether the energy storage module (30; 80) should be connected in parallel with the first battery module or in parallel with the second battery module to balance the states of the first and second battery modules, and
d) based on the determination of step c) operating the four switches (40, 42, 44, 46) accordingly.

15. The method of operation according to claim 14, wherein the first parameter and the second parameter are chosen between:
- a state of health of the first battery module (20) and a state of health of the second battery module (22);
- a state of charge of the first battery module (20) and a state of charge of the second battery module (22); or
- a number of discharges the first battery module (20) has completed and a number of discharges the second battery module (22) has completed.

## Amended claims

### Amended claims in accordance with Rule 137(2) EPC.

1. An energy storage system (12; 112; 212) for an electrified vehicle (10) comprising a first battery module (20) having a positive terminal (20A) and a negative terminal (20B) and a second battery module (22) having a positive terminal (22A) and a negative terminal (22B), wherein:
- the negative terminal of the first battery module is connected to the positive terminal of the second battery module, so that the first and the second battery modules are connected in series,
- the positive terminal of the first battery module is connected to a first positive output (24A; 60) of the energy storage system, and
- the negative terminal of the second battery module is connected to a first negative output (24B) of the energy storage system,
wherein the energy storage system (12; 112; 212) is configured to provide a first voltage to a first electric load by connecting the first electric load to the first positive output (24A; 60) and to the first negative output (24B),
wherein:
- the energy storage system (12; 112; 212) comprises an energy storage module (30; 80) having a positive terminal (30A; 82A) and a negative terminal (30B; 84B), wherein:
∘ the positive terminal of the energy storage module is connected to a second positive output (32A; 70) of the energy storage system,
∘ the negative terminal of the energy storage module is connected to a second negative output (32B) of the energy storage system, and
∘ the energy storage system is configured to provide a second voltage to a second electric load by connecting the second electric load to the second positive output and to the second negative output, the second voltage being lower than the first voltage;
- the energy storage system comprises four switches (40, 42, 44, 46), of which:
∘ a first switch (40) is switchable between a closed state in which the positive terminal (30A; 82A) of the energy storage module (30; 80) is electrically connected to the positive terminal (20A) of the first battery module (20) and an open state in which the positive terminal of the energy storage module is electrically isolated from the positive terminal of the first battery module,
∘ a second switch (42) is switchable between a closed state in which the negative terminal (30B; 84B) of the energy storage module (30; 80) is electrically connected to the negative terminal (20B) of the first battery module (20) and an open state in which the negative terminal of the energy storage module is electrically isolated from the negative terminal of the first battery module,
∘ a third switch (44) is switchable between a closed state in which the positive terminal (30A; 82A) of the energy storage module (30; 80) is electrically connected to the positive terminal (22A) of the second battery module (22) and an open state in which the positive terminal of the energy storage module is electrically isolated from the positive terminal of the second battery module, and
∘ a fourth switch (46) is switchable between a closed state in which the negative terminal (30B; 84B) of the energy storage module (30; 80) is electrically connected to the negative terminal (22B) of the second battery module (22) and an open state in which the negative terminal of the energy storage module is electrically isolated from the negative terminal of the second battery module; and
- the energy storage system (12; 112; 212) can take one of three configurations where:
∘ in a first configuration, the energy storage module (30; 80) is connected in parallel with the first battery module (20), the first and second switches (40, 42) being in the closed state and the third and fourth switches (44, 46) being in the open state,
∘ in a second configuration, the energy storage module is connected in parallel with the second battery module (22) the first and second switches (40, 42) being in the open state and the third and fourth switches (44, 46) being in the closed state, and
∘ in a third configuration, the energy storage module is electrically isolated from the first and second battery modules (20, 22), with the four switches (40, 42, 44, 46) in their open state,
**characterized in that** the energy storage system (112) comprises an auxiliary first positive output (62), wherein the energy storage system is configured to provide an auxiliary first voltage to an auxiliary first electric load by connecting the auxiliary first electric load to the auxiliary first positive output and to the first negative output (24B), and, preferably, the energy storage system comprises:
- a main first switch (64), switchable between a closed state in which the first positive output (60) is electrically connected to the positive terminal (20A) of the first battery module (20) and an open state in which the first positive output is electrically isolated from the positive terminal of the first battery module, and
- an auxiliary first switch (66), switchable between a closed state in which the auxiliary first positive output (62) is electrically connected to the positive terminal of the first battery module and an open state in which the auxiliary first positive output is electrically isolated from the positive terminal of the first battery module,
and/or **in that** the energy storage system (112) comprises an auxiliary second positive output (72), wherein the energy storage system is configured to provide an auxiliary second voltage to an auxiliary second electric load by connecting the auxiliary second electric load to the auxiliary second positive output and to the second negative output (32B), and, preferably, the energy storage system comprises:
- a main second switch (74), switchable between a closed state in which the second positive output (70) is electrically connected to the positive terminal (30A) of the energy storage module (30) and an open state in which the second positive output is electrically isolated from the positive terminal of the energy storage module, and
- an auxiliary second switch (76), switchable between a closed state in which the auxiliary second positive output (72) is electrically connected to the positive terminal of the energy storage module and an open state in which the auxiliary second positive output is electrically isolated from the positive terminal of the energy storage module.

2. The energy storage system (12; 112; 212) according to claim 1, wherein the energy storage system (12; 112; 212) further comprises an electronic control unit (50) configured to control the switching of the four switches (40, 42, 44, 46) between their closed and open states.

3. The energy storage system (12; 112; 212) according to claim 2, wherein the electronic control unit (50) comprises a battery management system (52) configured to manage the charge and the discharge of the first battery module (20), of the second battery module (22) and of the energy storage module (30; 80).

4. The energy storage system (12; 112; 212) according to either one of claims 2 or 3, wherein the electronic control unit (50) comprises an energy management system (54) configured to choose whether the first battery module (20) or the second battery module (22) recharges the energy storage module (30; 80) or whether the energy storage module recharges the first battery module or the second battery module.

5. The energy storage system (12; 112; 212) according to any one of claims 1 to 4, wherein the energy storage module (30; 80) comprises at least one battery.

6. The energy storage system (12; 112; 212) according to any one of claims 1 to 5, wherein the energy storage module (30; 80) comprises at least one supercapacitor.

7. The energy storage system (12; 112; 212) according to any one of claims 1 to 6, wherein the first voltage is twice as high as the second voltage.

8. The energy storage system (212) according to any one of claims 1 to 7, wherein:
- the energy storage module (80) comprises a first sub-module (82), having a positive terminal (82A) and a negative terminal (82B), and a second sub-module (84), having a positive terminal (84A) and a negative terminal (84B), the negative terminal of the first sub-module being connected to the positive terminal of the second sub-module, so that the first and the second sub-modules are connected in series,
- the energy storage system (212) comprises an auxiliary energy storage module (86) having a positive terminal (86A) connected to a third positive output (88A) of the energy storage system and a negative terminal (86B) connected to a third negative output (88B) of the energy storage system, wherein the energy storage system is configured to provide a third voltage to a third electric load by connecting the third electric load to the third positive output and to the third negative output, the third voltage being lower than the second voltage,
- the energy storage system comprises four auxiliary switches (90, 92, 94, 96), of which:
∘ a first auxiliary switch (90) is switchable between a closed state in which the positive terminal (86A) of the auxiliary energy storage module (86) is electrically connected to the positive terminal (82A) of the first sub-module (82) and an open state in which the positive terminal of the auxiliary energy storage module is electrically isolated from the positive terminal of the first sub-module,
∘ a second auxiliary switch (92) is switchable between a closed state in which the negative terminal (86B) of the auxiliary energy storage module (86) is electrically connected to the negative terminal (82B) of the first sub-module (82) and an open state in which the negative terminal of the auxiliary energy storage module is electrically isolated from the negative terminal of the first sub-module,
∘ a third auxiliary switch (94) is switchable between a closed state in which the positive terminal (86A) of the auxiliary energy storage module (86) is electrically connected to the positive terminal (84A) of the second sub-module (84) and an open state in which the positive terminal of the auxiliary energy storage module is electrically isolated from the positive terminal of the second sub-module, and
∘ a fourth auxiliary switch (96) is switchable between a closed state in which the negative terminal (86B) of the auxiliary energy storage module (86) is electrically connected to the negative terminal (84B) of the second sub-module (84) and an open state in which the negative terminal of the auxiliary energy storage module is electrically isolated from the negative terminal of the second sub-module,
- the energy storage system (12; 112; 212) can take one of three configurations where:
∘ in a first configuration, the auxiliary energy storage module (80) is connected in parallel with the first sub-module (82), the first and second auxiliary switches being in the closed state and the third and fourth auxiliary switches being in the open state,
∘ in a second configuration, the auxiliary energy storage module (80) is connected in parallel with the second sub-module (84), the first and second auxiliary switches being in the open state and the third and fourth auxiliary switches being in the closed state, and
∘ in a third configuration, the auxiliary energy storage module (80) is electrically isolated from the first and second sub-modules (82, 84), with the four auxiliary switches (90, 92, 94, 96) in their open state.

9. An electrified vehicle (10) comprising the energy storage system (12; 112; 212) according to any one of claims 1 to 8.

10. The electrified vehicle (10) of claim 9, wherein the electrified vehicle (10) further comprises an alternator (16) and wherein the alternator provides electricity for recharging the first battery module (20) and the second battery module (22), or provides electricity for recharging the energy storage module (30; 80).

11. The electrified vehicle (10) of either one of claims 9 or 10, wherein the electrified vehicle (10) further comprises an electric generator, and wherein, when the electrified vehicle is decelerating, the electric generator provides electricity for recharging the first battery module (20) and the second battery module (22), or provides electricity for recharging the energy storage module (30; 80), by regenerative braking.

12. A method of operation of an energy storage system (12; 112; 212) according to any one of claims 1 to 8, **characterized in that** the method comprises:
a) measuring a first parameter representative of the state of the first battery module (20) and a second parameter representative of the state of the second battery module (22),
b) comparing the first parameter to the second parameter,
c) based on the comparison of step b), determining whether the energy storage module (30; 80) should be connected in parallel with the first battery module or in parallel with the second battery module to balance the states of the first and second battery modules, and
d) based on the determination of step c) operating the four switches (40, 42, 44, 46) accordingly.

13. The method of operation according to claim 12, wherein the first parameter and the second parameter are chosen between:
- a state of health of the first battery module (20) and a state of health of the second battery module (22);
- a state of charge of the first battery module (20) and a state of charge of the second battery module (22); or
- a number of discharges the first battery module (20) has completed and a number of discharges the second battery module (22) has completed.
